# EUROPEAN PATENT SPECIFICATION

(11) **EP 3 117 365 B1**
(45) Date of publication and mention of the grant of the patent: **07.08.2019**
(21) Application number: 15761633.5
(22) Date of filing: 06.03.2015
(51) Int. Cl.: G06K 7/10, G06K 1/12, G06K 19/06, G06K 5/00, G06K 7/14

(54) **OPTICAL INFORMATION CODE READING METHOD**
VERFAHREN ZUM LESEN OPTISCHER INFORMATIONSCODES
PROCÉDÉ DE LECTURE DE CODE D'INFORMATIONS OPTIQUES

(30) Priority: 14.03.2014 JP 2014052104
(43) Date of publication of application: 18.01.2017
(73) Proprietor: Ricoh Company, Ltd., Tokyo 143-8555 (JP)
(72) Inventor: ISHIMI, Tomomi, Tokyo 143-8555 (JP); OHI, Katsuya, Tokyo 143-8555 (JP); KAWAHARA, Shinya, Tokyo 143-8555 (JP); ASAI, Toshiaki, Tokyo 143-8555 (JP)
(74) Representative: White, Duncan Rohan
(86) International application number: PCT/JP2015/057397
(87) International publication number: WO 2015/137475

(56) References cited:
- JP-A- H11 151 856
- JP-A- 2003 242 447
- US-A- 3 949 233
- US-A- 6 073 848
- US-A1- 2008 192 618
- US-B1- 6 616 046

## Description

### Technical Field

The present invention relates to an optical information code reading method.

### Background Art

Conventionally, image recording and image erasing on an information recording medium such as a thermoreversible recording medium have been performed with a contact-type image recording method where a heat source is brought into contact with the thermoreversible recording medium to heat the thermoreversible recording medium. The heat source used is generally a thermal head for image recording and a heat roller or a ceramic heater for image erasing. In such contact-type image recording method, when the thermoreversible recording medium is flexible one such as a film or paper, a platen is used to uniformly press the heat source against the thermoreversible recording medium, whereby uniform image recording and image erasing can be performed. In addition, conventionally used parts of printers for heat-sensitive paper can be used also for this method to inexpensively produce an image recording device and an image erasing device, which is advantageous.

There has been increased desire to rewrite the image of the information recording medium in a non-contact manner. For example, there has been proposed a method using laser beams as a method for uniformly recording and erasing images in a non-contact manner or at a distance, which method is employed when the surface of the information recording medium has convexes and concaves (see PTL 1). This proposed method performs non-contact recording on information recording media used in conveyance containers for physical distribution lines. And, this patent literature describes that recording is performed with laser beams and erasing is performed with hot air, hot water or an infrared heater.

Such a laser beam recording method is performed with a laser recording device (laser marker) capable of irradiating a thermoreversible recording medium with high-power laser beams and controlling the position where the laser beams are irradiated. This laser marker can be used to irradiate the thermoreversible recording medium with the laser beams so that a photothermal converting material in the thermoreversible recording medium converts light into heat which can be used to record and erase images.

Hitherto, as a method for recording and erasing images using laser beams, there has been proposed a method for recording images with near-infrared laser beams using in combination a leuco dye, a reversible color developer, and various photothermal converting materials (see PTL 2).

Using the related arts described in PTLs 3 and 4, it is possible to uniformly heat a thermoreversible recording medium to thereby improve image quality and repetition durability, and to rewrite (record and erase) bar code images on the thermoreversible recording medium.

As a method for improving reading accuracy of bar code images, there has been proposed a method for improving a reading rate of the bar code images by correcting signals read by a bar code scanner, calculating, and reading with appropriate setting parameters (see PTLs 5, 6, and 7).

Also, as a method for improving handleability of two-dimensional code images, there has been proposed a method for improving a reading rate of QR code images by correcting signals read by a QR code scanner, calculating, and reading with appropriate setting parameters, similar to the case of the bar code images.

In the case where the thermoreversible recording medium is heated using near infrared laser beams as the laser beams, as described above, the photothermal converting material absorbing the near infrared laser beams is added to the information recording media. Therefore, a background of the thermoreversible recording medium is disadvantageously colored. A reading wavelength of the bar code scanner is typically visible light of 630 nm to 700 nm. Accordingly, the coloring of the background of the thermoreversible recording medium results in low reflectivity. As a result, immediately after image recording of the bar code image, the thermoreversible recording medium absorbing the near infrared laser beams has low reflectivity on the background and high reflectivity on an image recorded portion. That is, the bar code image has low contrast.

The bar code scanner irradiates with laser beams the thermoreversible recording medium on which the bar code image has been recorded, detects reflected lights from the background on which the bar code image has not been recorded and from the image recorded portion, and then converts the reflected lights to bar code information. Therefore, there is a problem that, in the case where a difference between the reflected lights is small, i.e., in the case where the bar code image has low contrast, the bar code scanner cannot determine the bar code image, leading to low reading accuracy.

Also in two-dimensional code images, similar to the case of the bar code images, there is a problem that, in the case where the two-dimensional code image has low contrast, the QR code scanner cannot determine the two-dimensional code image, leading to low reading accuracy.

Therefore, there is a demand for providing an optical information code reading method which can improve reading accuracy of even a low contract optical information code image immediately after image recording of the optical information code image onto an information recording medium of which background has low reflectivity.

### Citation List

### Patent Literature

PTL 1 Japanese Patent Application Laid-Open (JP-A) No. 2000-136022
PTL 2 JP-A No. 11-151856
PTL 3 JP-A No. 2008-62506
PTL 4 JP-A No. 2008-213439
PTL 5 JP-A No. 09-300711
PTL 6 JP-A No. 2003-58820
PTL 7 JP-A No. 2012-64173

US2008192618 proposes a surface-condition-information obtaining unit that obtains information on a surface condition of a rewritable display medium on which information is reversely displayed visually. A write-laser output unit outputs a write laser to irradiate the rewritable display medium with the write laser, to perform a drawing on the rewritable display medium. A control unit performs a write process for displaying an image on the rewritable display medium by adjusting a laser output condition based on the information obtained by the surface-condition-information obtaining unit and controlling the write-laser output unit based on an adjustment of the laser output condition.

### Summary of Invention

### Technical Problem

An object of the present invention is to provide an optical information code reading method which can improve reading accuracy of even a low contract optical information code image.

### Solution to Problem

According to the present invention, there is provided a method as set out in claim 1.

### Advantageous Effects of Invention

The present invention can solve the above existing problems and can provide an optical information code reading method which can improve reading accuracy of even a low contract optical information code image.

### Brief Description of Drawings

FIG. 1 illustrates a schematic diagram of one exemplary image processing device and bar code scanner reading system used in a physical distribution line.
FIG. 2A illustrates one exemplary graph of change in image density versus time elapsed immediately after image recording in each of two types of thermoreversible recording media as information recording media.
FIG. 2B illustrates one exemplary graph of change in image density versus time elapsed immediately after image recording in the case where only image recording was performed and in the case where image recording was performed immediately after image erasing.
FIG. 3A illustrates one exemplary amplitude amplification in the case where a light receiving element receives low intensity light in an amplitude tuning unit of a bar code scanner.
FIG. 3B illustrates one exemplary amplitude attenuation in the case where a light receiving element receives high intensity light in an amplitude tuning unit of a bar code scanner.
FIG. 4 illustrates a schematic diagram of another exemplary image processing device (laser marker device).
FIG. 5 illustrates a schematic cross-sectional diagram of one exemplary layer construction of a thermoreversible recording medium as an information recording medium.
FIG. 6A illustrates a graph indicating a color developing/erasing property of a thermoreversible recording medium as an information recording medium.
FIG. 6B illustrates a schematic explanatory diagram indicating a mechanism by which a thermoreversible recording medium as an information recording medium changes between a color developed state and a color-erased state.

### Description of Embodiments

### (Optical information code reading method)

An optical information code reading method includes reading an optical information code image by an optical information code scanner immediately after recording of the optical information code image onto an information recording medium,
wherein the optical information code scanner includes an amplitude tuning unit configured to correct a detected amplitude level of reflectivity from the information recording medium on which the optical information code image has been recorded and to store the corrected detected amplitude level, and
wherein the optical information code scanner reads the optical information code image in a state in which the optical information code scanner has read the information recording medium on which the optical information code image has been recorded, and the amplitude tuning unit has determined and stored a detected amplitude level optimum for reading.

The optical information code reading method can suitably be applied to, for example, a bar code reading method or a two-dimensional code reading method. Among them, it is particularly preferably applied to a bar code reading method.

In the case of the bar code reading method, a bar code image is read by a bar code scanner. In the case of the two-dimensional code reading method, a two-dimensional code image is read by a QR code scanner.

Examples of the bar code include ITF, Code128, Code39, JAN, EAN, UPC, and NW-7.

The following explanation for the optical information code reading method will be made based on the bar code reading method, but is similarly applicable to the two-dimensional code reading method without any limitation.

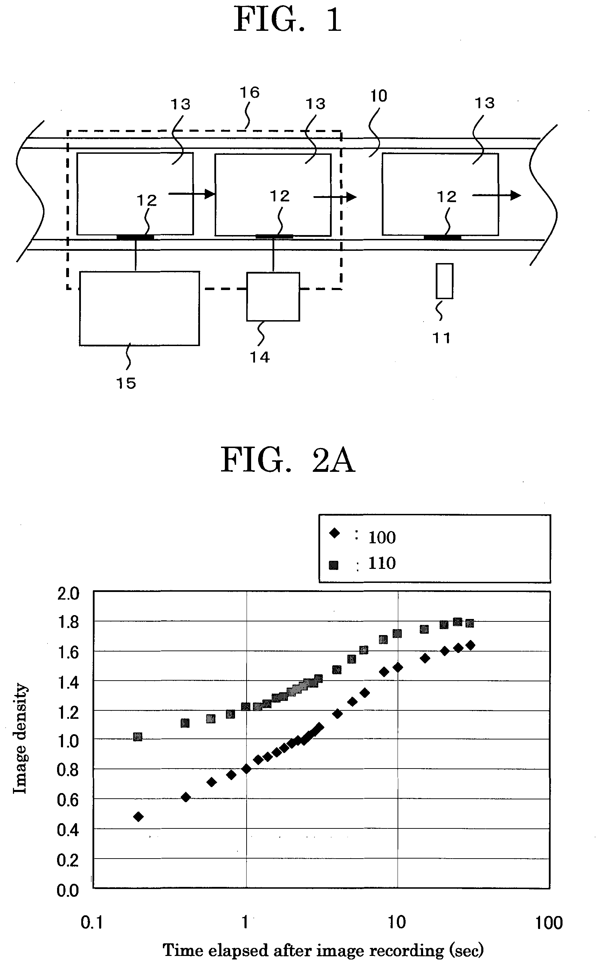

FIG. 1 illustrates a schematic diagram of one exemplary image processing device and bar code scanner reading system used in a physical distribution line. In FIG. 1, a reference sign 10 denotes a conveyer, a reference sign 11 denotes a bar code scanner, a reference sign 12 denotes an image recording layer, a reference sign 13 denotes a conveyance container, a reference sign 14 denotes an image recording device, a reference sign 15 denotes a image erasing device, and a reference sign 16 denotes a laser beam shielding protection cover.

Conventionally, in a physical distribution application, a label (information recording medium) on which visual information is recorded is stuck on a conveyance container, which is conveyed by a conveyor system. The visual information includes bar code information, which is utilized for management of the conveyor system. In a current conveyor system, label information is renewed by sticking a label on a conveyance container by an automatic labeler and peeling it off. However, in the case where information is recorded with laser beams on the thermoreversible recording medium in a non-contact manner, man-hour for sticking and peeling off a label and an error in sticking the label are eliminated, which allows for efficient operation. The conveyor system requires high-speed rewriting processing, so there is a need of high speed rewriting.

In the physical distribution line, information on the conveyance container is managed as follows. Specifically, a label (information recording medium) on which visual information including bar code information is recorded by a single-use thermal head is stuck on the conveyance container by the automatic labeler, and immediately thereafter, the information is read by a bar code scanner. Therefore, in order to manage the physical distribution line accurately without stopping operation of the physical distribution line, the bar code scanner is required to have high reading accuracy.

In the case where information is rewritten on the information recording medium which has been stuck on the conveyance container using near infrared laser beams in a non-contact manner rather than sticking the label on which the information is recorded by the thermal head on the conveyance container by the automatic labeler in a conventional manner, a bar code image has low contrast due to coloration of a background on the information recording medium and low image density immediately after image recording of the bar code image, leading to low bar code reading accuracy, which is problematic.

In the case where the bar code scanner reads the bar code image immediately after the image recording of the bar code image, "immediately after" means that a time interval from the completion of the image recording to reading of the bar code image is preferably 10 seconds or shorter, preferably 0.5 seconds to 10 seconds, more preferably 0.5 seconds to 3 seconds.

Because the system is managed with the bar code image, when the time interval is longer than 10 seconds, delay of detection of an error or image failure of the bar code image by the system is caused and it takes a long time to restore the system by, for example, removing the conveyance container (e.g., 4 conveyance containers (boxes) retain on the line in the case of throughput of 1,500 containers per hour), which may prevent smooth operation of the physical distribution line.

The time interval from the completion of image erasing of a bar code image to image recording of another bar code image is preferably 10 seconds or shorter, more preferably 0.5 seconds to 10 seconds.

When the time interval is longer than 10 seconds, the image density is slowly increased, so that the bar code which has a still low contrast is read, leading to low bar code reading accuracy. As a result, reading error is occurred, which may prevent smooth operation of the physical distribution management system.

When the time interval is shorter than 0.5 seconds, the bar code image is recorded with heat used for image erasing being stored, which causes low image density. Therefore, similar to the above, the bar code which is a still low contrast is read, leading to low bar code reading accuracy. As a result, reading error is occurred, which may prevent smooth operation of the physical distribution management system.

The physical distribution line is managed based on information recorded in the bar code image. When the information is wrong, it is necessary to stop the physical distribution line and remove the conveyance container having the wrong information from the physical distribution line. When the time interval is long, the number of the conveyance containers to be removed is increased. Therefore, the time interval is preferably short, more preferably 2 seconds or shorter from the viewpoint of system management.

In the physical distribution line, a system in which an article is placed in the conveyance container in a picking manner (i.e., a human puts the article into the conveyance container according to instructions) is employed. In order to improve efficiency, throughput of 1,500 containers per hour is required which can usually be processed in the picking manner. In the case where information is rewritten on the information recording medium which has stuck on the conveyance container, of course, rewriting throughput is also required to be 1,500 containers per hour. That is, one conveyance container should be rewritten for 2.4 seconds. Practically, it takes a total of 0.6 seconds to move the conveyance container to in front of the image processing device and stop. Therefore, a period of time actually available for rewriting is 1.8 seconds, so that a high-speed rewriting is required.

The bar code scanner as a reading system preferably performs reading of the bar code image immediately after an image has been recorded, and more preferably performs the reading at a timer interval corresponding to the throughput. That is, ideally, the bar code is read 2.4 seconds after the image recording in terms of system management assuming that the rewriting throughput is 1,500 containers per hour.

The physical distribution line is demanded to be improved in throughput. In the future, the rewriting throughput is demanded to be further increased. There is a physical distribution line in which throughput of 2,400 containers per hour has already achieved by increasing picking efficiency. Accordingly, the throughput may be further increased, which requires faster rewriting.

In order to perform rewriting at a high speed, a higher output image recording device and/or a higher sensitive information recording medium is needed.

Example of a high-output and inexpensive laser light source includes a laser diode. Near infrared laser beam has been widely used for processing and laser marking because it can achieve higher output and be inexpensively available. Additionally, the near infrared laser beam is invisible in an outside of a visible light region, so that coloring of a background on an information recording medium absorbing the near infrared laser beam can be minimized.

In order to achieve the higher output image recording device for the purpose of rewriting at higher speed, a light source having higher output is needed. However, the light source having higher output results in a larger spot diameter, making it impossible to record a high definition image. Therefore, this solution is difficult to realize.

Meanwhile, as a method for achieving the higher sensitive information recording medium, the rewriting (image recording and image erasing) can be performed at a high speed by increasing an amount of the photothermal converting material to thereby increase an amount of the laser beams to be absorbed. However, the photothermal converting material generally absorbs not only near infrared light but also visible light, in particular, the wavelength for reading a bar code image. Therefore, when a large amount of the photothermal converting material is contained for the purpose of rewriting at higher speed, the background of the information recording medium is disadvantageously colored, leading to low reflectivity for reading the bar code image. That is, the bar code image has low contrast.

FIG. 2A illustrates a graph of change in image density versus time elapsed immediately after the image has been recorded in each of two types of thermoreversible recording media 100 and 110 as information recording media.

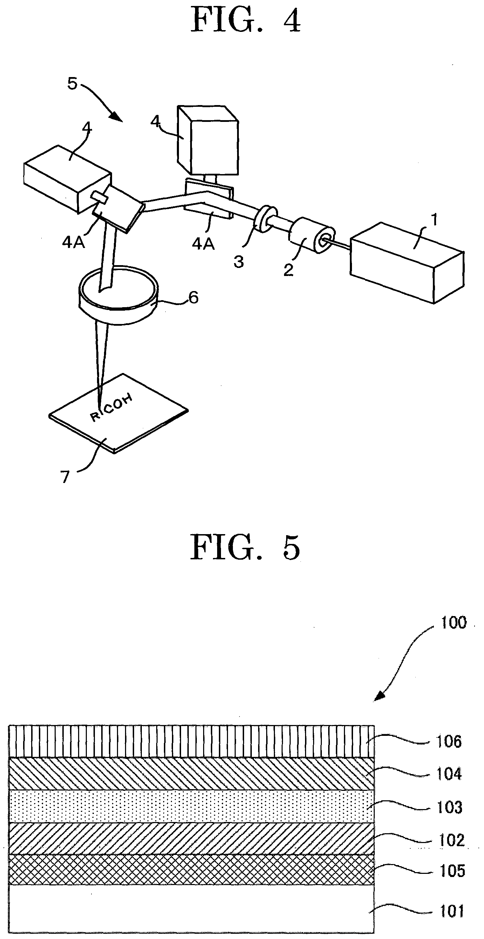

A thermoreversible recording medium 100 has a layer construction shown in FIG. 5, and includes an under layer 105 and a thermoreversible recording layer 102 which are provided on a (support + first oxygen barrier layer) 101; and an intermediate layer 103, a second oxygen barrier layer 104, and an ultraviolet absorbing layer 106 which are provided on the thermoreversible recording layer in this order.

A thermoreversible recording medium 110 has the same layer construction as the thermoreversible recording medium 100, except that the second oxygen barrier layer 104 and the ultraviolet absorbing layer 106 are not included.

As shown in FIG. 2A, the thermoreversible recording media 100 and 110 have low image densities immediately after the image has been recorded. The image density of the thermoreversible recording medium 100 changes more greatly. The image density is low immediately after the image recording of the bar code image. In the physical distribution line where the bar code image is read several seconds after the image recording, the bar code image having a still low image density (i.e., low contrast) is read, leading to low reading accuracy, which is problematic.

In the physical distribution line, the image erasing device and the image recording device are not necessarily arranged side by side with each other. In some cases, the image recording is performed long after the image erasing is performed in another place.

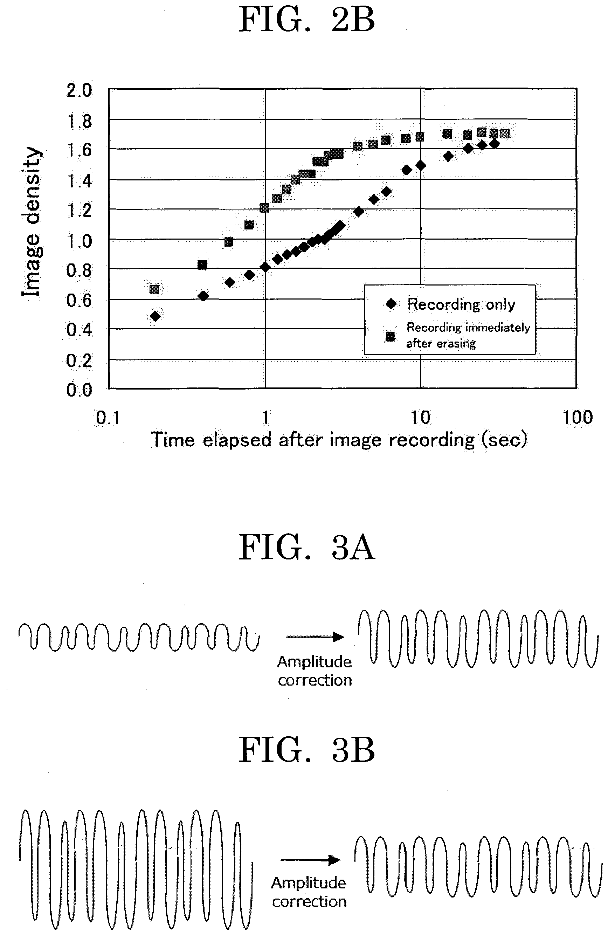

FIG. 2B illustrates a graph of change in image density versus time elapsed immediately after the image has been recorded in the thermoreversible recording medium 100 in a rewriting manner. The image density is low immediately after the image has been recorded both in the case of image recording only (diamond) and in the case of image recording immediately after image erasing (square). Therefore, in the physical distribution line where the bar code image is read several seconds after the image recording, the bar code image having a still low image density (i.e., low contrast) is read, leading to low reading accuracy, which is problematic.

In the case of image recording immediately after image erasing, the image density immediately after the image has been recorded can be higher than that of the case of image recording only. Therefore, it has been found that the bar code reading accuracy of the bar code image can be improved even immediately after the image has been recorded.

### <Bar code scanner>

The bar code scanner generally read the bar code image by irradiating the bar code image with laser beams or LED light, receiving reflected light therefrom at light receiving elements, and converting the reflected light to electrical signals. The light intensity received at the light receiving elements of the bar code scanner varies depending on an external light environment and contrast of the bar code image. The amplitude of the electrical signals also varies depending on the conditions. Therefore, the bar code cannot read under an optimum state of electrical signals, leading to low reading accuracy of the bar code. Accordingly, the bar code scanner is required to have a function for amplifying the electrical signals and to be capable of adapting to the external light environment and the contrast of images.

Generally, the reading accuracy of the bar code scanner is influenced by the contrast of the information recording medium. When a difference of reflectivities between a white portion having high reflectivity (background) and a black portion having low reflectivity (image recorded portion) is less than 40%, the reading accuracy of the bar code is decreased. When the difference is 30% or less, the bar code cannot be read without amplifying the electrical signals in some cases.

The amplitude tuning unit for correcting and storing the detected amplitude level is a unit configured to correct the detected amplitude level to an optimum electrical signal amplitude level in the case where the light intensity received at the light receiving elements of the bar code scanner varies depending on the external light environment and the contrast of the bar code image. The amplitude tuning unit can improve the reading accuracy of the bar code.

The reading wavelength of the bar code scanner is 630 nm to 700 nm from the viewpoints of being inexpensive and capable of achieving high contrast.

The bar code scanner generally read the bar code image by irradiating the bar code image with laser beams or LED light, receiving reflected light therefrom at light receiving elements, and converting the reflected light to electrical signals. The amplitude of the electrical signal varies depending on the light intensity received at the light receiving element. Therefore, the bar code cannot be read under an optimum condition in both cases where the amplitude is too large and too small, leading to low reading accuracy

The light intensity received at the light receiving element varies depending on the external light environment and the contrast of the bar code image. Accordingly, the bar code scanner has a function of adjusting the amplitude of the electrical signal.

In FIG. 3A, the light intensity received at the light receiving elements in the amplitude tuning unit of the bar code scanner is low, so that the amplitude is amplified to adjust the amplitude to thereby improve the bar code reading accuracy.

In FIG. 3B, the light intensity received at the light receiving elements in the amplitude tuning unit of the bar code scanner is high, so that the amplitude is attenuated to adjust the amplitude to thereby improve the bar code reading accuracy.

The amplitude tuning function for correcting and storing the detected amplitude level is a function of correcting the detected amplitude level to an optimum electrical signal amplitude level in the case where the light intensity received at the light receiving elements of the bar code scanner varies depending on the external light environment and the contrast of the bar code image. The amplitude tuning function can improve the reading accuracy of the bar code.

The information recording medium used in the present invention has low reflectivity on its background for the purpose of achieving rewriting at higher speed. In the case where the bar code image has low image density immediately after the image has been recorded, the amplitude tuning function for correcting and storing the detected amplitude level can utilized to improve the reading accuracy of the bar code.

### <Image processing device>

The image processing device is an image processing device configured to irradiate a thermoreversible recording medium as an information recording medium with laser beams and heating the thermoreversible recording medium to thereby erase an image from and record an image onto the thermoreversible recording medium. The image processing device includes a laser beam emitting unit, a laser beam scanning unit, a focal length controller, and an information setting unit; and, if necessary, further includes other units.

In the case where information is rewritten on the thermoreversible recording medium as the information recording medium which has been stuck on the conveyance container used in the physical distribution line, the image recording onto and the image erasing from the thermoreversible recording medium is deteriorated relative to conventional contact-type thermal head printers. This deterioration results from the following two factors. Firstly, the interwork distance between the thermoreversible recording medium and the image recording device varies depending on a stop position of the conveyance container. Secondly, a temperature of the conveyance container is different from environmental temperature. The deterioration degrades quality of the bar code image and the reading accuracy of the bar code scanner.

The quality of the bar code image is suppressed from degrading and the reading accuracy of the bar code scanner can be maintained by correcting an optical focal length and an angle of view of the image recording device based on the measurement result of the interwork distance between the thermoreversible recording medium and the image recording device (for the former factor), and by correcting irradiation power of the image recording device based on the measurement result of the temperature of the conveyance container or the thermoreversible recording medium with a radiation thermometer (for the latter factor).

### <<Laser beam emitting unit>>

The laser beam emitting unit is a unit configured to emit laser beams. Examples thereof include a YAG laser, a fiber laser, a laser diode (LD) and a fiber coupled laser. Among them, the fiber coupled laser is particularly preferred, since it can easily form a light physical distribution of a top hat form and thus can achieve image recording with high visibility.

The wavelength of the laser beam emitted from the laser beam emitting unit is not particularly limited and may be appropriately selected depending on the intended purpose, but is preferably 700 nm or longer, more preferably 720 nm or longer, further preferably 750 nm or longer. The upper limit of the wavelength of the laser beam is preferably 1,600 nm or shorter, more preferably 1,300 mm or shorter, further preferably 1,200 nm or shorter.

When the laser beam having a wavelength of shorter than 700 nm is used, in the visible light region, there may be a drop in contrast upon image recording of a thermoreversible recording medium as an information recording medium, and the thermoreversible recording medium is colored. In the ultraviolet region shorter in wavelength, the thermoreversible recording medium is likely to be degraded. Meanwhile, a photothermal converting material to be added to the thermoreversible recording medium is required to have a high decomposition temperature for ensuring durability to repeatedly performed image processing. When an organic pigment is used as the photothermal converting material, it is difficult to obtain a photothermal converting material that has a high decomposition temperature and absorbs light of longer wavelengths. Thus, the wavelength of the laser beam is preferably 1,600 nm or shorter.

The laser beam scanning unit is a unit configured to scan laser beams emitted by the laser beam emitting unit on a surface of the thermoreversible recording medium irradiated with laser beams.

The laser beam scanning unit is not particularly limited and may be appropriately selected depending on the intended purpose, as long as it can scan laser beams on a surface irradiated with laser beams. Examples thereof include a galvanometer and a mirror attached to the galvanometer.

### <<Focal length controlling unit>>

The focal length controller is a unit that includes a position shiftable lens system between the laser beam emitting unit and the laser beam scanning unit, and is configured to control the focal length of the laser beam by adjusting the position of the lens system.

A distance measuring unit is a unit configured to measure the distance between the thermoreversible recording medium as the information recording medium and the laser beam emitting surface of the laser beam emitting unit. Here, the distance between the thermoreversible recording medium and the laser beam emitting surface of the laser beam emitting unit is also referred to as "interwork distance". The "interwork distance" can be measured using, for example, a scale or sensor. When the "interwork distance" is measured with a sensor and then corrected based on the measurement results, for example, the measurement results can be corrected with the image processing device.

The distance can be measured in any manner appropriately selected depending on the intended purpose. For example, it can be measured with a distance sensor. Examples of the distance sensor include a non-contact-type distance sensor and a contact-type distance sensor. The contact-type distance sensor can do damage to the medium to be measured and makes it difficult to rapidly measure the distance. Thus, the non-contact-type distance sensor is preferred. Among the non-contact-type distance sensors, a laser displacement sensor is particularly preferred since it can rapidly and accurately measure the distance and is inexpensive and small.

### <<Temperature measuring unit>>

A temperature measuring unit is a unit configured to measure a temperature of the thermoreversible recording medium as the information recording medium or the conveyance container, an ambient temperature of the thermoreversible recording medium as the information recording medium, or both thereof. The irradiation energy is controlled based on the measurement result of the temperature measuring unit.

Image recording and image erasing on the thermoreversible recording medium are performed by means of heat. Therefore, the optimum irradiation energy varies according to the temperature. Specifically, it is preferable to control so as to irradiate the thermoreversible recording medium with low energy laser beams when the temperature is high and with high energy laser beams when the temperature is low. The temperature can be measured in any manner appropriately selected depending on the intended purpose. For example, it can be measured with a temperature sensor.

Examples of the temperature sensor include an environmental temperature sensor configured to measure an ambient temperature, and a medium temperature sensor configured to measure a temperature of a medium. A preferable example of the environmental temperature sensor includes a thermistor because it can be used at low costs and can rapidly and accurately measure the temperature. A preferable example of the medium temperature sensor includes a radiation thermometer because it can measure the temperature in a non-contact manner.

### <<Image recording>>

The image recording includes irradiating and heating the thermoreversible recording medium as the information recording medium with the laser beams having the irradiation energy modulated based on the distance measured, to thereby record an image on the medium.

The irradiation energy of the laser beams is proportional to P/V where P denotes an irradiation power of laser beams on the thermoreversible recording medium, and V denotes a scanning velocity of laser beams on the thermoreversible recording medium.

Thus, preferably, by adjusting at least one of the scanning velocity (V) and the irradiation power (P) of laser beams, the irradiation energy of laser beams is adjusted so that the P/V becomes substantially constant.

In controlling the irradiation energy of the laser beams, the laser irradiation energy of the laser beams can be increased by decreasing the scanning velocity of the laser beams or by increasing the irradiation power of the laser beams. Also, the irradiation energy of the laser beams can be decreased by increasing the scanning velocity of the laser beams or by decreasing the irradiation power of the laser beams.

The method for controlling the scanning velocity of the laser beams is not particularly limited and may be appropriately selected depending on the intended purpose. Examples thereof include a method of controlling the rotation speed of a motor responsible for the operation of a scanning mirror.

The method for controlling the irradiation power of the laser beams may be appropriately selected depending on the intended purpose. Examples thereof include a method of changing the set value of the irradiation power and a method of adjusting the peak power and the pulse (time) width.

Example of the method of changing the set value of the irradiation power includes a method of changing the set power value in the recording portion. Example of the method of adjusting the pulse time width includes a method of changing the time width of pulsing in the recording portion. With these methods, it is possible to control the irradiation energy by controlling the irradiation power.

In the image recording, the output power of the laser beams is not particularly limited and may be appropriately selected depending on the intended purpose. It is preferably 1 W or more, more preferably 3 W or more, further preferably 5 W or more. When the output power is less than 1 W, it takes a long time to perform image recording. In an attempt to shorten the time required for image recording, the output power becomes insufficient. The upper limit of the output power of the laser beams is not particularly limited and may be appropriately selected depending on the intended purpose. It is preferably 200 W or less, more preferably 150 W or less, further preferably 100 W or less. When the output power exceeds 200 W, a larger laser marker device has to be used in some cases.

In the image recording, the scanning velocity of the laser beams is not particularly limited and may be appropriately selected depending on the intended purpose. It is preferably 300 mm/s or more, more preferably 500 mm/s or more, further preferably 700 mm/s or more. When the scanning velocity is less than 300 mm/s, it takes a long time to perform image recording. The upper limit of the scanning velocity of the laser beams is not particularly limited and may be appropriately selected depending on the intended purpose. It is preferably 15,000 mm/s or less, more preferably 10,000 mm/s or less, further preferably 8,000 mm/s or less. When the scanning velocity exceeds 15,000 mm/s, the scanning velocity becomes difficult to be controlled to make it difficult to form uniform images.

In the image recording, the spot diameter of laser beams is not particularly limited and may be appropriately selected depending on the intended purpose. It is preferably 0.02 mm or more, more preferably 0.1 mm or more, further preferably 0.15 mm or more. The upper limit of the spot diameter of the laser beams is not particularly limited and may be appropriately selected depending on the intended purpose. It is preferably 2.0 mm or less, more preferably 1.5 mm or less, further preferably 1.0 mm or less. When the spot diameter is small, the line width of the formed image becomes thin, potentially leading to a drop in visibility. Whereas when the spot diameter is large, the line width of the formed image becomes bold and adjacent lines are overlapped each other, making it impossible to record a small-size image.

Examples of the laser beam source include a YAG laser, a fiber laser, a laser diode and a fiber coupled laser.

In order to record an image having a high visibility with laser, it is necessary to uniformly heat a recording region of a thermoreversible recording medium as an information recording medium irradiated with laser beams. Commonly used laser beams have a Gaussian physical distribution and thus become high in intensity at the central portion of the medium. Recording an image by such laser beams lowers the contrast at the circumferential portion than that at the central portion, resulting in poor visibility and image quality. One possible measure against this problem is inserting in the optical path a light physical distribution-modifying optical element (e.g., an aspheric lens or a DOE element). This measure elevates the cost required for devices, and also makes difficult optical design for preventing skewness of light physical distribution due to aberration. However, when using a fiber coupled laser, laser beams of a top hat form can be easily obtained from the end of the fiber without using any light physical distribution-modifying optical element, enabling recording of an image having a high visibility. Thus, a fiber coupled laser is particularly preferably used.

In the other lasers having a Gaussian physical distribution, the beam diameter becomes larger while keeping a Gaussian physical distribution as the laser is distanced from the focal length (point). Thus, as the laser is distanced from the focal length (point), the line width becomes broad to cause a drop in visibility. The fiber coupled laser has a top hat-form light physical distribution at the focal position. Although the beam diameter of the fiber coupled laser becomes larger as the fiber coupled laser is distanced from the focal length (point), the beam diameter at the central portion irradiated with higher energy beams does not become large. Even when the fiber coupled laser is distanced from the focal length, the line width of the formed image does not become broad. Thus, the fiber coupled laser is particularly preferably used.

In general, laser beams have a Gaussian physical distribution at both the focal position and a position distant therefrom, and only the beam diameter becomes large. Thus, even when the energy density is set constant, the line width of the printed image becomes broad in proportion to the beam diameter.

The fiber coupled laser combines laser beams with a fiber, where the laser beams are made to be uniform. It can provide a top hat-form light physical distribution at the focal position. Although the beam diameter becomes large as distanced from the focal position, it is close to light physical distribution having a Gaussian physical distribution. Since printed lines are formed when the energy exceeds a certain energy level, even when the energy density is set constant and the beam diameter becomes large as distanced from the focal position, the line width does not become broad by performing printing with the central portion of a Gaussian physical distribution, whereby the line width having substantially the same width as that obtained at the focal position can be obtained.

When a drawn image is recorded on the thermoreversible recording medium as the information recording medium immediately after an image having been recorded thereon is erased by irradiating the thermoreversible recording medium with laser beams and heating it, there may occur problems such as degradation of the density of the drawn image and degradation of repetition durability. Further, when an image is recorded with a fixed laser output in a image recording step, there may occur problems such as line width broadening, collapsing of characters and symbols, degradation of the image density, degradation of the reading accuracy of an information recording code, and degradation of the repetition durability.

The method for controlling the scanning velocity of the laser beams is not particularly limited and may be appropriately selected depending on the intended purpose. Examples thereof include a method of controlling the rotation speed of a motor responsible for the operation of a scanning mirror.

### <<Image erasing>>

The image erasing includes irradiating and heating the thermoreversible recording medium as the information recording medium with laser beams to erase the image thereon.

In the image erasing, the output power of the laser beams is not particularly limited and may be appropriately selected depending on the intended purpose. It is preferably 5 W or more, more preferably 7 W or more, further preferably 10 W or more. When the output power of the laser beams is less than 5 W, it takes a long time to perform image erasing. In an attempt to shorten the time required for image erasing, the output power becomes insufficient to cause erase failure of the image. The upper limit of the output power of the laser beams is not particularly limited and may be appropriately selected depending on the intended purpose. It is preferably 200 W or less, more preferably 150 W or less, further preferably 100 W or less. When the output power of the laser beams exceeds 200 W, a larger laser marker device has to be used in some cases.

In the image erasing, the scanning velocity of the laser beams is not particularly limited and may be appropriately selected depending on the intended purpose. It is preferably 100 mm/s or more, more preferably 200 mm/s or more, further preferably 300 mm/s or more. When the scanning velocity is less than 100 mm/s, it may take a long time to perform image erasing. The upper limit of the scanning velocity of the laser beams is not particularly limited and may be appropriately selected depending on the intended purpose. It is preferably 20,000 mm/s or less, more preferably 15,000 mm/s or less, further preferably 10,000 mm/s or less. When the scanning velocity exceeds 20,000 mm/s, it may be difficult to perform uniform image erasing.

The laser beam source is not particularly limited and may be appropriately selected depending on the intended purpose, but is preferably at least one selected from the group consisting of a YAG laser, a fiber laser and a laser diode.

In the image erasing, the spot diameter of the laser beams is not particularly limited and may be appropriately selected depending on the intended purpose. It is preferably 1 mm or more, more preferably 2.0 mm or more, further preferably 3.0 mm or more. The upper limit of the spot diameter of the laser beams is not particularly limited and may be appropriately selected depending on the intended purpose. It is preferably 20.0 mm or less, more preferably 16.0 mm or less, further preferably 12.0 mm or less.

When the spot diameter is small, it takes a long time to perform image erasing. Whereas when the spot diameter is large, the output power becomes insufficient to cause erase failure of the image.

An image processing device for performing the image recording and the image erasing is similar in basic configuration to the one that is generally called as a laser marker device except that the former includes at least the laser beam emitting unit and laser beam scanning unit. The image processing device further includes, for example, an oscillator unit, a power supply control unit and a program unit.

FIG. 4 illustrates a schematic diagram of one exemplary image processing device used in the present invention. This image processing device includes a laser oscillator 1, a collimator lens + focus position control mechanism 2, a condenser lens 3, and a scanning unit 5. In FIG. 4, a reference sign 6 denotes a protective glass.

The laser oscillator 1 is a necessary unit for obtaining a laser beam with high intensity and high directivity. A beam of light that oscillates only in an optical axis direction is selectively amplified, thereby increasing the directivity of light and emitting a laser beam from an output mirror.

The scanning unit 5 is composed of galvanometers 4 each having a mirror 4A attached to the galvanometer 4. The two mirrors 4A that are attached to the galvanometers 4 and that respectively oriented in X axis direction and Y axis direction are so configured that they are rotated at a high speed to thereby cause a laser beam emitted from the laser oscillator 1 to be scanned over a thermoreversible recording medium 7 as an information recording medium for image recording or erasing.

The power supply control unit includes a power supply for driving a light source for exciting a laser medium, a power supply for driving galvanometers, a power supply for cooling a Peltier-element and a control section for controlling the image processing device as a whole.

The program unit is a unit configured to receive conditions such as laser beam intensity and laser scanning velocity and creates and edits characters to be recorded for image recording and erasing, through touch panel input or key board input.

The laser beam emitting unit, or the image recording/ erasing head, is mounted to the image processing device, and the image processing device is also equipped with, for example, a transfer unit for thermoreversible recording media, a control unit for the transfer unit, and a monitor (touch panel).

An image erasing device can repeatedly erase an image on a thermoreversible recording medium as an information recording medium in a non-contact manner, such as a label stuck on a conveyance container (e.g., cardboard or plastic container). Thus, it can particularly suitably used in physical distribution/delivery management systems. In this case, while the cardboard or plastic container is being moved on a belt conveyer, an image can be recorded or erased on a label. It is not necessary to stop the line, resulting in shortening the time required for shipping. The label can be recycled as is for image erasure and recording without being peeled off from the cardboard or plastic container.

### <Information recording medium>

The information recording medium can be used in both of an embodiment where an image recording layer is a thermosensitive recording layer and image recording is performed only once, and an embodiment where an image recording layer is a thermoreversible recording layer and image recording and image erasing are performed repeatedly. However, it is particularly preferably a thermoreversible recording medium, which can perform image recording and image erasing repeatedly, since it can be used repeatedly.

The thermoreversible recording medium will next be described in detail.

In the thermoreversible recording medium which is irradiated with the near infrared laser beams for rewriting (image recording and image erasing), the photothermal converting material which absorbs the near infrared laser beams is needed to be added to the thermoreversible recording medium. The photothermal converting material absorbs the laser beams of 630 nm to 700 nm which is the reading wavelength of the bar code scanner, so that reflectivity of the background is decreased to thereby decrease contrast. In order to achieve rewriting at high speed, the amount of the photothermal converting material to be added is needed to be increased, leading to low background reflectivity.

The thermoreversible recording medium has low image density immediately after the image recording, leading to high reflectivity and low contrast.

Generally, the thermoreversible recording medium has the reflectivity on the background portion of about 85%. When the photothermal converting material is added thereto so as to achieve rewriting with near infrared laser beams, the reflectivity is reduced. For example, when the photothermal converting material is added in an amount needed to achieve throughput corresponding to 1,500 container/hour (i.e., customer requirement), the reflectivity is reduced to about 55% to about 60%. The reflectivity on the image recorded portion is 10% to 15%. Accordingly, the contrast is determined as about 45%.

The reflectivity immediately after the image recording of the bar code image is lower, i.e., 30% to 40%, and the contrast is determined as about 20% to about 30%.

The thermoreversible recording medium includes a support and a thermoreversible recording layer disposed on the support. If necessary, the thermoreversible recording medium further includes appropriately selected other layers such as a photothermal converting layer, a first oxygen barrier layer, a second oxygen barrier layer, a ultraviolet absorbing layer, a back layer, a protective layer, an intermediate layer, an undercoat layer, an adhesive layer, a sticking layer, a colored layer, an air layer and a light reflecting layer. Each of these layers may have a single-layered structure or a multi-layered structure. For the purpose of reducing energy loss of irradiated laser beam having a specific wavelength, the layers provided on or above the photothermal converting layer are preferably formed of materials that absorb light of the specific wavelength in a small amount.

### <<Support>>

The shape, structure and size of the support are not particularly limited and may be appropriately selected depending on the intended purpose. Examples of the shape include a tabular shape, and the structure may be a single-layered structure or a multi-layered structure, and the size may be appropriately selected depending on the size of the thermoreversible recording medium.

### <<Thermoreversible recording layer>>

The thermoreversible recording layer contains a leuco dye which is an electron-donating coloring compound and a color developer which is an electron-accepting compound, and is a thermoreversible recording layer which reversibly changes in color tone by heat. If necessary, the thermoreversible recording layer further contains a binder resin and other ingredients.

The leuco dye (electron-donating coloring compound) and the reversible color developer (electron-accepting compound) which reversibly change in color by heat are materials capable of reversibly causing visible changes depending on a change in temperature. These materials can turn into a relatively color developed state or a relatively color-erased state depending on the heating temperature and on the cooling rate after heating.

### -Leuco dye-

The leuco dye itself is a colorless or light-colored dye precursor. The leuco dye is not particularly limited and may be appropriately selected from those known in the art. Suitable examples thereof include leuco compounds such as triphenylmethane phthalides, triallylmethanes, fluorans, phenothiazines, thiofluorans, xanthenes, indophthalyls, spiropyrans, azaphthalides, chromenopyrazoles, methines, rhodamineanilinolactams, rhodaminelactams, quinazolines, diazaxanthenes and bislactones. Among them, fluoran leuco dyes and phthalide leuco dyes are particularly preferred since they are excellent in, for example, color developing/erasing properties, color hue, and storage stability.

### -Reversible color developer-

The reversible color developer is not particularly limited and may be appropriately selected depending on the intended purpose, so long as it can reversibly develop and erase color by the action of heat. Suitable examples thereof include compounds having in the molecule one or more of structures selected from (1) a structure allowing the leuco dye to develop color (e.g., a phenolic hydroxyl group, a carboxyl group and a phosphoric acid group) and (2) a structure controlling intermolecular aggregation force (e.g., a structure linked with a long chain hydrocarbon group). Note that, the long chain hydrocarbon group may be linked via a hetero atom-containing di- or more valent linking group and also, the long chain hydrocarbon group may contain the same linking group, an aromatic group, or both of them.

The structure (1) allowing the leuco dye to develop color is particularly preferably phenol.

The structure (2) controlling intermolecular aggregation force is preferably a long chain hydrocarbon group having 8 or more carbon atoms, more preferably 11 or more carbon atoms, where the upper limit of the number of carbon atoms is preferably 40 or less, more preferably 30 or less.

The electron-accepting compound (color developer) is preferably used in combination with a color erasure accelerator which is a compound having in the molecule one or more -NHCO- groups and/or -OCONH-groups, since an intermolecular interaction is induced between the color erasure accelerator and the color developer in the process of forming the erased state, resulting in improving color developing/erasing properties.

The color erasure accelerator is not particularly limited and may be appropriately selected depending on the intended purpose.

If necessary, the thermoreversible recording layer may contain a binder resin and various additives which are used to improve and control coating characteristics and color developing/erasing properties of the thermoreversible recording layer. Examples of the additives include surfactants, conducting agents, fillers, antioxidants, photostabilizers, color development stabilizers, and color erasure accelerators.

### -Binder resin-

The binder resin is not particularly limited and may be appropriately selected depending on the intended purpose, so long as it can bind the thermoreversible recording layer onto the support. Conventionally known resins may be used alone or in combination. In order to improve durability after repetitive use, heat-, ultraviolet- or electron beam- curable resins are preferably used. In particular, thermosetting resins using an isocyanate compound as a crosslinking agent are suitable.

### -Photothermal converting material-

A photothermal converting material is a material that, when added in the thermoreversible recording layer, performs a function of absorbing laser beams with high efficiency and thereby generating heat. The photothermal converting material is added according to the wavelength of the laser beam.

The photothermal converting material can be roughly classified into inorganic materials and organic materials.

Examples of the inorganic materials include carbon black, metals such as Ge, Bi, In, Te, Se and Cr, semimetals and alloys containing them. These are formed into a layer by vacuum deposition, or by bonding together particulate materials with resin.

Various dyes may appropriately be used as the organic materials depending on the wavelength of light to be absorbed. When a laser diode is used as a light source, near-infrared absorbing pigments having an absorption peak in the range of 700 nm to 1,500 nm are used. Specific examples thereof include cyanine pigments, quinine pigments, quinoline derivatives of indonaphthol, phenylenediamine nickel complexes and phthalocyanine compounds. It is preferable to select a photothermal converting material being excellent in heat resistance in order to perform image processing repeatedly. In terms of this, phthalocyanine compounds are particularly preferred.

The near-infrared absorbing pigments may be used alone or in combination.

When the photothermal converting layer is provided, the photothermal converting material is generally used in combination with a resin. The resin used in the photothermal converting layer is not particularly limited and may be appropriately selected from those known in the art, so long as it can retain the inorganic material and the organic material. Thermoplastic resins and thermosetting resins are preferably used as the resin. Similar resins to the binder resins used in the thermoreversible recording layer can suitably used. Among them, in order to improve durability after repetitive use, heat-, ultraviolet- or electron beam- curable resins are preferably used. In particular, thermosetting resins using an isocyanate compound as a crosslinking agent are suitable.

### <<First and second oxygen barrier layers>>

The first and second oxygen barrier layers are provided for preventing oxygen from entering the thermoreversible recording layer. In order to prevent the leuco dye contained in the first and second thermoreversible recording layers from being degraded by light, oxygen barrier layer are preferably provided so as to sandwich the first and second thermoreversible recording layers. That is, preferably, the first oxygen barrier layer is provided between the support and the first thermoreversible recording layer, and the second oxygen barrier layer is provided over the second thermoreversible recording layer.

### <<Protective layer>>

In the thermoreversible recording medium of the present invention, a protective layer is preferably provided on the thermoreversible recording layer for the purpose of protecting the thermoreversible recording layer. The protective layer is not particularly limited and may be selected appropriately selected depending on the intended purpose. The protective layer may be formed as one or more layers and is preferably provided on the exposed uppermost surface of the thermoreversible recording medium.

### <<Ultraviolet absorbing layer>>

In the present invention, in order to prevent the leuco dye contained in the thermoreversible recording layer from suffering coloring due to UV rays and incomplete color erasure resulting from degradation due to light, an ultraviolet absorbing layer is preferably provided on a side of the thermoreversible recording layer which is opposite to the side over which the support is to be disposed. Provision of the ultraviolet absorbing layer can improve the thermoreversible recording medium in lightfastness. It is preferable to appropriately select the thickness of the ultraviolet absorbing layer so that the ultraviolet absorbing layer absorbs ultraviolet rays having a wavelength of 390 nm or shorter.

### <<Intermediate layer>>

In the present invention, an intermediate layer is preferably disposed between the thermoreversible recording layer and the protective layer, for the purposes of enhancing adhesion properties between the thermoreversible recording layer and the protective layer, preventing degeneration of the thermoreversible recording layer due to application of the protective layer thereon, and preventing the additives contained in the protective layer from transferring into the recording layer. Provision of the intermediate layer can improve storage stability of a color-developed image.

### <<Under layer>>

In the present invention, the under layer may be disposed between the thermoreversible recording layer and the support, for the purposes of achieving high sensitivity by efficiently utilizing heat applied, improving adhesion properties between the support and the thermoreversible recording layer, and preventing permeation of the thermoreversible recording layer's materials into the support.

### <<Back Layer>>

In the present invention, a back layer may be disposed on a side of the support which is opposite to the side on which the thermoreversible recording layer is to be disposed, for the purposes of preventing curling or charging of the thermoreversible recording medium and improving transferability.

The back layer contains at least a binder resin; and, if necessary, further contains other ingredients such as fillers, conductive fillers, lubricants and coloring pigments.

### <<Adhesive layer and sticking layer>>

In the present invention, it is possible to form a thermoreversible recording label by disposing an adhesive layer or sticking layer on a side of the support which is opposite to the side on which the thermoreversible recording layer is to be formed. Commonly used materials can be used to prepare the adhesive layer or sticking layer.

One exemplary layer structure of the thermoreversible recording medium includes, as illustrated in FIG. 5, an under layer 105 and a thermoreversible recording layer 102 which are provided on (a support + a first oxygen barrier layer) 101; and an intermediate layer 103, a second oxygen barrier layer 104, and an ultraviolet absorbing layer 106 which are provided on the thermoreversible recording layer in this order.

### <Mechanism of image recording and erasing>

The mechanism of image recording and erasing is a mechanism in which color tone reversibly changes by the action of heat. This mechanism is achieved with a leuco dye and a reversible color developer (hereinafter may be referred to as "color developer") where color tone reversibly changes between a transparent state and a color developed state by the action of heat.

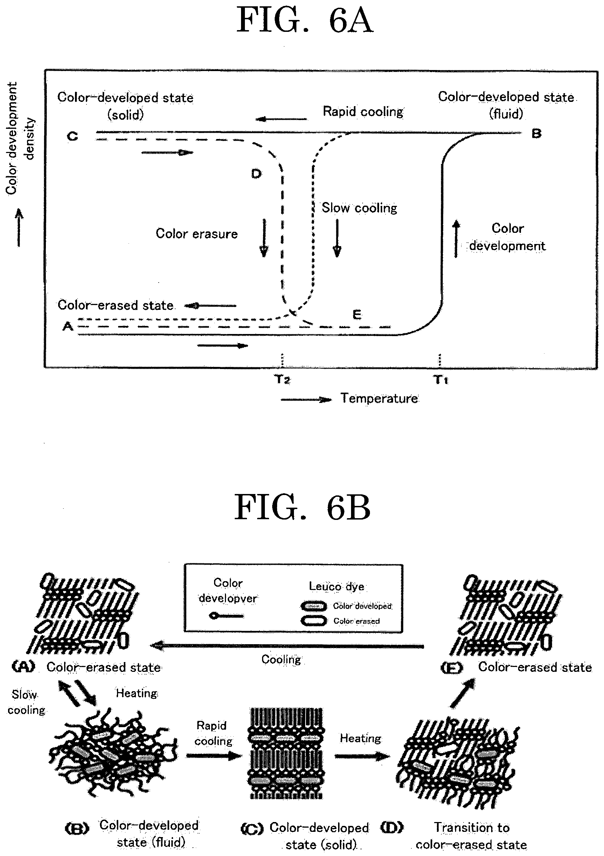

FIG. 6A illustrates one exemplary temperature-color developing density change curve of a thermoreversible recording medium having a thermoreversible recording layer made of resin in which the leuco dye and the color developer are contained. FIG. 6B shows the color developing/erasing mechanism of the thermoreversible recording medium by which color tone reversibly changes between a transparent state and a color developed state by the action of heat.

First, when the recording layer which is in a color erased state (A) is heated, the leuco dye and the color developer are melted and mixed together at a melting temperature T1, so that color is developed and the recording layer is in a molten color developed state (B). When the layer in the molten color developed state (B) is cooled rapidly, it can be cooled to room temperature while developing the color thereof and the molten color developed state (B) is stabilized, resulting in a stable color developed state (C). Whether this stable color developed state is successfully obtained depends on the cooling rate from the molten state. When the layer is cooled gradually, color is erased in the course of cooling and it turns into its original color erased state (A) or a state of relatively lower density than the color developed state (C) formed by rapid cooling. Meanwhile, when the recording layer is again heated from the color developed state (C), color is erased at a temperature T2, which is a temperature lower than the color developing temperature (from D to E). Then, when it is cooled, the recording layer returns to its original color erased state (A).

The color developed state (C), obtained by rapid cooling of the molten recording layer, is a state in which the leuco dye and the color developer are mixed together in such a way that molecules may come in contact with each other for reaction. This state is often in a solid state. In this state, a molten mixture (the color developed mixture) of the leuco dye and the color developer is crystallized for development of color, and the color is considered to be stably developed with this configuration. On the other hand, in the color erased state, the leuco dye is phase separated from the developer. In this state, molecules of at least one of the leuco dye and the color developer are clustered to form a domain or are crystallized. Therefore, the leuco dye and the color developer are considered to be separated from each other to be stabilized by aggregation or crystallization. In many cases, the color is erased more completely due to crystallization of the color developer through the phase separation of the color developer from the leuco dye.

Note in FIG. 6A that both color erasing achieved by gradual cooling from the molten state and color erasing achieved by heating from the color developed state involve changes in the structure of aggregated molecules at the temperature T2, thereby causing phase separation and crystallization of the color developer.

Also in FIG. 6A, when the recording layer is repeatedly heated to a temperature T3 equal to or higher than melting temperature T1, erase failure may occur in which an image cannot be erased even through heating to an erase temperature. This is likely because the color developer is thermally decomposed to hardly aggregate or crystallize, which makes it difficult to be separated from the leuco dye. In order to suppress degradation of the thermoreversible recording medium due to repeated heating, the difference between the melting temperature T1 and the temperature T3 in FIG. 6A is decreased upon heating the thermoreversible recording medium.

The optical information code reading method of the present invention can improve the reading accuracy of even a low contrast optical information code image immediately after the image recording on the information recording medium having low reflectivity on its background. Therefore, the method is suitable for a physical distribution management system, a delivery management system, a storage management system, and a process management system in a factory.

### Examples

Examples of the present invention will now be described, but is not limited thereto.

In the following Examples and Comparative Examples, the optical information code reading method will be described based on the bar code reading method, but is similarly applicable to the two-dimensional code reading method without any limitation. Also, the following Examples and Comparative Examples present examples where the information recording medium is a thermosensitive recording medium containing, as an image recording layer, a thermosensitive recording layer in which image recording is performed only once, and a thermoreversible recording medium containing, as an image recording layer, a thermoreversible recording layer in which image recording and image erasing are performed repeatedly.

### (Production Example 1)

### <Production of thermoreversible recording medium>

A thermoreversible recording medium reversibly changing in color tone by the action of heat was produced in the following manner.

### -Support-

A white polyester film having an average thickness of 125 µm (TETRON (registered trademark) film U2L98W, manufactured by Teijin DuPont Co.) was prepared as a support.

### -Formation of first oxygen barrier layer-

A urethane adhesive (TM-567, manufactured by Toyo-Morton, Ltd.) (5 parts by mass), an isocyanate (CAT-RT-37, manufactured by Toyo-Morton, Ltd.) (0.5 parts by mass) and ethyl acetate (5 parts by mass) are mixed together, followed by thoroughly stirring, to thereby prepare an oxygen barrier layer coating liquid.

Next, the prepared oxygen barrier layer coating liquid was applied with a wire bar onto a silica vapor deposition PET film (TECHBARRIER HX, oxygen permeability: 0.5 mL/m²/day/MPa, manufactured by Mitsubishi Plastics Inc.), followed by heating and drying at 80°C for 1 min. This silica vapor deposition PET film having the oxygen barrier layer was stuck on the above support, followed by heating at 50°C for 24 hours, to thereby form a first oxygen barrier layer having a thickness of 12 µm.

### -Under layer-

A styrene-butadiene copolymer (PA-9159, manufactured by Nippon A&L Inc.) (30 parts by mass), a polyvinyl alcohol resin (POVAL PVA103, manufactured by Kuraray Co., Ltd.) (12 parts by mass), hollow particles (MICROSPHERE R-300, manufactured by Matsumoto Yushi-Seiyaku Co., Ltd.) (20 parts by mass) and water (40 parts by mass) are mixed together, followed by stirring for 1 hour until it became uniform, to thereby prepare an under layer coating liquid.

Next, the prepared under layer coating liquid was applied with a wire bar onto the support, followed by heating and drying at 80°C for 2 min, to thereby form an under layer having an average thickness of 20 µm.

### -Formation of thermoreversible recording layer-

A reversible color developer represented by the following Structural Formula (1) (5 parts by mass), a color erasure accelerator represented by the following Structural Formula (2) (0.5 parts by mass), another color erasure accelerator represented by the following Structural Formula (3) (0.5 parts by mass), a 50% by mass acrylpolyol solution (hydroxyl value: 200 mgKOH/g) (10 parts by mass) and methyl ethyl ketone (80 parts by mass) were milled and dispersed with a ball mill until the average particle diameter of these materials was about 1 µm.

### <Structural Formula (1)>

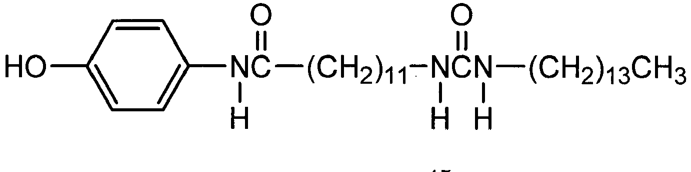

### <Structural Formula (2)>

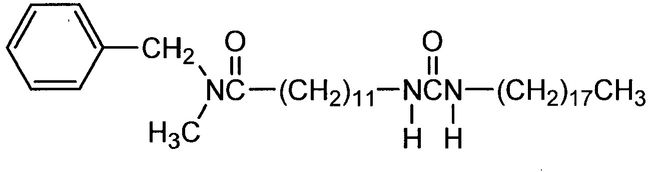

### <Structural Formula (3)>

### C₁₇H₃₅CONHC₁₈H₃₇

Next, to the above prepared dispersion liquid in which the milled reversible color developer had been dispersed, were added 2-anilino-3-methyl-6-dibutylaminofluoran serving as the leuco dye (1 part by mass) and an isocyanate (CORONATE HL, manufactured by NIPPON POLYURETHANE INDUSTRIES CO., LTD.) (5 parts by mass) and lanthanum boride (manufactured by Sumitomo Metal Mining Co., Ltd.) serving as a photothermal converting material (0.15 parts by mass), followed by thoroughly stirring, to thereby prepare a thermoreversible recording layer coating liquid.

The prepared thermoreversible recording layer coating liquid was applied with a wire bar onto the first oxygen barrier layer, followed by drying at 100°C for 2 min and then by curing at 60°C for 24 hours, to thereby form a thermoreversible recording layer having a thickness of 12.0 µm.

### -Formation of second oxygen barrier layer-

A silica vapor deposition PET film having the same oxygen barrier layer as the first oxygen barrier layer was stuck on the ultraviolet absorbing layer, followed by heating at 50°C for 24 hours, to thereby form a second oxygen barrier layer having a thickness of 12 µm.

### -Formation of ultraviolet absorbing layer-

A 40% by mass ultraviolet absorbing polymer solution (UV-G300, manufactured by NIPPON SHOKUBAI CO., LTD.) (10 parts by mass), an isocyanate (CORONATE HL, manufactured by NIPPON POLYURETHANE INDUSTRIES CO., LTD.) (1.5 parts by mass), and methyl ethyl ketone (12 parts by mass) were mixed together, followed by thoroughly stirring, to thereby prepare an ultraviolet absorbing layer coating liquid.

Next, the prepared ultraviolet absorbing layer coating liquid was applied with a wire bar onto the thermoreversible recording layer, followed by heating and drying at 90°C for 1 min and then by heating at 60°C for 24 hours, to thereby form an ultraviolet absorbing layer having a thickness of 3 µm.

Thus, a thermoreversible recording medium of Production Example 1 was produced.

### (Production Example 2)

### <Production of thermoreversible recording medium>

A thermoreversible recording medium of Production Example 2 was produced in the same manner as in Production Example 1, except that the second oxygen barrier layer was not formed.

### (Production Example 3)

### <Production of thermosensitive recording medium>

A thermoreversible recording medium, a color tone of which was reversibly changed, was produced in the following manner.

### -Support-

As for the support, a white polyester film (Tetron (registered trade mark) Film U2L98W, manufactured by Teijin DuPont Films Japan Limited) having the average thickness of 125 µm was provided.

### -Thermosensitive recording layer-

By means of a ball mill, 6 parts by mass of octadecylphosphonic acid serving as a color developer, 16 parts by mass of a 10% by mass plyvinyl acetoacetal solution (KS-1, manufactured by SekisuiChemical Co., Ltd.), 12 parts by mass of toluene, and 3 parts by mass of methyl ethyl ketone were ground and dispersed until the average particle diameter thereof was to be about 0.3 µm. To the resulting dispersion liquid, 1.5 parts by mass of 2-anilino-3-methyl-6-diethylaminofluorene serving as a leuco dye, and 0.37 parts by mass of a 1.85% by mass LaB₆ dispersion liquid (KHF-7A, manufactured by Sumitomo Metal Mining Co., Ltd.) serving as a photothermal converting material, were added. The resulting mixture was sufficiently stirred, to thereby prepare a thermosensitive recording layer coating liquid. Subsequently, the obtained thermosensitive recording layer coating liquid was applied onto the support using a wire bar. The applied thermosensitive recording layer coating liquid was heated for 2 minutes at 60°C to dry, to thereby form a thermosensitive recording layer having the average thickness of 10 µm.

### -Protective layer-

By means of a ball mill, 3 parts by mass of silica (P-832, manufactured by Mizusawa Industrial Chemicals, Ltd.), 3 parts by mass of a 10% by mass polyvinyl acetoacetal solution (KS-1, manufactured by SekisuiChemical Co., Ltd.), and 14 parts by mass of methyl ethyl ketone were ground and dispersed until the average particle diameter thereof was to be about 0.3 µm.

To the resulting dispersion liquid, 12 parts by mass of a 12.5% by mass silicone-modified polyvinyl butyral solution (SP-712, manufactured by Dainichiseika Color & Chemicals Mfg Co., Ltd.), and 24 parts by mass of methyl ethyl ketone were added, and the resulting mixture was sufficiently stirred to thereby prepare a protective layer coating liquid.

Subsequently, the protective layer coating liquid was applied to the thermosensitive recording layer using a wire bar. The applied protective layer coating liquid was heated for 2 minutes at 60°C to dry, to thereby form a protective layer having a thickness of 1µm. Through the above procedure, a thermosensitive recording medium of Production Example 3 was produced.

### (Example 1)

As shown in FIG. 4, an optical system was formed by arranging a fiber-coupled LD (laser diode) light source (PLD 33, manufactured by IPG Photonics Corporation, central wavelength: 980 nm, maximum power output: 25 W) as the laser light source (laser oscillator) 1, arranging the collimator lens + focal length controller 2 immediately behind the fiber for collimating the beam, and arranging the condenser lens 3 for condensing the light. Thereafter, image erasing and image recording were performed on the thermoreversible recording medium of Production Example 1 under the following conditions using an image recording device that was configured to irradiate the thermoreversible recording medium with laser beams by scanning the laser beams with a galvanoscanner 6230H (manufactured by Cambridge Inc) serving as the scanning unit 5.

### <Image recording>

The thermoreversible recording medium was fixed with the rewritable laser marker (LDM200-110, manufactured by Ricoh Company, Ltd.) such that the interwork distance from the surface of an optical head to the thermoreversible recording medium would be 150 mm, and the beam diameter was adjusted with the collimator lens + focal length controller 2 such that the beam diameter would be the minimum on the thermoreversible recording medium.

Here, the interwork distance means the distance between the laser beam emitting surface of the laser beam emitting unit and the thermoreversible recording medium.

In order to perform rewriting to a 50 mm × 85 mm region of the thermoreversible recording medium, image information including a bar code, scanning velocity of 3,000 mm/s, and pulse width of 75% as irradiation power setting (i.e., 18.5 W when converted to output on the thermoreversible recording medium) were input as image recording information from an information setting unit of an image setting unit. An interwork distance of 150 mm was input as distance information between the laser light emitting surface of the laser light emitting unit and the thermoreversible recording medium.

An environmental temperature sensor and a distance sensor were both set to ON. The environmental temperature sensor attached to the rewritable laser marker (LDM200-110, manufactured by Ricoh Company, Ltd.) was used as the environmental temperature sensor. The displacement sensor (HL-G112-A-C5, manufactured by Panasonic Industrial Devices SUNX Co., Ltd.) was used as the distance sensor.

### <Image erasing>

Image erasing was performed with a rewritable laser eraser (LDE800-A, manufactured by Ricoh Company, Ltd.). Image erasing information was set as follows: a region having a scanning width of 80 mm, scanning velocity of 45 mm/s, and irradiation power setting of 78%. The environmental temperature sensor and the distance sensor were both set to ON. The environmental temperature sensor attached to the rewritable laser eraser (LDE800-A, manufactured by Ricoh Company, Ltd.) was used as the environmental temperature sensor. The displacement sensor (HL-G112-A-C5, manufactured by Panasonic Industrial Devices SUNX Co., Ltd.) was used as the distance sensor.

### <Bar code scanner settings>

A bar code scanner (BL-1301HA, manufactured by KEYENCE CORPORATION.) was used as the bar code scanner. Using the "amplitude tuning unit" of the bar code scanner configured to correct and store the detected amplitude level of reflectivity from the thermoreversible recording medium on which a bar code image had been recorded, an amplitude was corrected with the "amplitude tuning unit" on the thermoreversible recording medium of Production Example 1 on which the bar code image had been recorded according to the above-described image recording conditions.

In Example 1, the installation position of the bar code scanner was adjusted so that the bar code scanner reads the bar code image 0.5 seconds after the completion of the image recording.

Next, the bar code reading accuracy and the rapidity in Example 1 were evaluated as follows. Results are shown in Table 1-2.

### <Bar code reading accuracy>

A conveyor system was assembled in which 10 conveyance containers on which the thermoreversible recording medium had been stuck were circulated in a loop. The rewritable laser marker (LDM200-110, manufactured by Ricoh Company, Ltd.), the rewritable laser eraser (LDE800-A, manufactured by Ricoh Company, Ltd.), and the bar code scanner were arranged on the conveyor system. A bar code image was rewritten using the rewritable laser marker (LDM200-110, manufactured by Ricoh Company, Ltd.) and the rewritable laser eraser (LDE800-A, manufactured by Ricoh Company, Ltd.), and the recorded bar code image was read using the bar code scanner. The above rewriting and reading were performed repeatedly. Thereafter, the bar code reading accuracy was evaluated according the following criteria. Note that, the time interval from the completion of the image erasing of a bar code image to the image recording of another bar code image was set to 10 seconds.

The reading accuracy was evaluated by reading 2,000 bar code images with the bar code scanner, and calculating the occurrence rate of bar code reading error therefrom. The number of occurrence of bar code reading error was 4, and the occurrence rate of bar code reading error was 0.2%.

### <Rapidity>

Because a physical distribution management system is managed with the bar code information, when the time interval from the completion of image recording of the bar code image to the reading of the bar code with the bar code scanner is prolonged, delay of detection of an error or image failure of the bar code image by the system is caused and it takes a long time to restore the system by, for example, removing the conveyance container, which may prevent smooth operation of the physical distribution line. Assuming that the throughput of the line is 1,500 containers per hour, when the time interval from the completion of the image recording of the bar code image to the reading of the bar code with the bar code scanner is 10 seconds, 4 conveyance containers are retained on the line. Whereas, when the time interval is within 3 seconds, only one conveyance container is retained, making it possible to shorten the time required to restore the system. Accordingly, the rapidity was evaluated according to the following criteria.

### [Evaluation criteria]

A: The time interval from the completion of the image recording of the bar code image to the reading of the bar code with the bar code scanner is shorter than 3 seconds.
B: The time interval from the completion of the image recording of the bar code image to the reading of the bar code with the bar code scanner is 3 seconds to 10 seconds.
C: The time interval from the completion of the image recording of the bar code image to the reading of the bar code with the bar code scanner is longer than 10 seconds.

### (Example 2)

The bar code reading accuracy and the rapidity were evaluated in the same manner as in Example 1, except that the installation position of the bar code scanner was adjusted so that the bar code scanner reads the bar code image 1 second after the completion of the image recording. The number of occurrence of bar code reading error was 2, and the occurrence rate of bar code reading error was 0.1%. Results are shown in Table 1-2.

### (Example 3)

The bar code reading accuracy and the rapidity were evaluated in the same manner as in Example 1, except that the installation position of the bar code scanner was adjusted so that the bar code scanner reads the bar code image 2 seconds after the completion of the image recording. The number of occurrence of bar code reading error was zero, and the occurrence rate of bar code reading error was 0%. Results are shown in Table 1-2.

### (Example 4)

The bar code reading accuracy and the rapidity were evaluated in the same manner as in Example 1, except that the installation position of the bar code scanner was adjusted so that the bar code scanner reads the bar code image 4 seconds after the completion of the image recording. The number of occurrence of bar code reading error was zero, and the occurrence rate of bar code reading error was 0%. Results are shown in Table 1-2.

### (Example 5)

The bar code reading accuracy and the rapidity were evaluated in the same manner as in Example 1, except that the installation position of the bar code scanner was adjusted so that the bar code scanner reads the bar code image 60 seconds after the completion of the image recording. The number of occurrence of bar code reading error was zero, and the occurrence rate of bar code reading error was 0%. Results are shown in Table 1-2.

### (Example 6)

The amplitude was corrected with the "amplitude tuning unit" in the same manner as in Example 1, except that the thermoreversible recording medium on which the bar code image used in the correction with "amplitude tuning unit" in Example 1 had been recorded was placed in an oven at 65°C for 12 hours to thereby reduce the image density of the bar code image to 0.9, that is, to thereby turn into a low contrast thermoreversible recording medium. Note that, the density of the bar code image was measured as follows. Specifically, a gray scale (manufactured by Kodak Co.) was scanned with an optical scanner (CANOSCAN 4400, manufactured by Canon Co.) in a gray scale mode and stored as a bit map file. Then, digital gradation values derived from the bit map file in gray scale was correlated with densities measured using a reflection densitometer (TYPE 939, manufactured by X-rite). Then, the digital gradation obtained by scanning a wide bar portion of the bar code image with the optical scanner was converted to a density, which was determined as a bar code image density.

The installation position of the bar code scanner was adjusted so that the bar code scanner reads the bar code image 0.5 seconds after the completion of the image recording.

The bar code reading accuracy and the rapidity were evaluated in the same manner as in Example 1. The number of occurrence of bar code reading error was zero, and the occurrence rate of bar code reading error was 0%. Results are shown in Table 1-2.

### (Example 7)

The bar code reading accuracy and the rapidity were evaluated in the same manner as in Example 6, except that the installation position of the bar code scanner was adjusted so that the bar code scanner reads the bar code image 2 seconds after the completion of the image recording. The number of occurrence of bar code reading error was zero, and the occurrence rate of bar code reading error was 0%. Results are shown in Table 1-2.

### (Example 8)

The bar code reading accuracy and the rapidity were evaluated in the same manner as in Example 7, except that the installation position of the bar code scanner was adjusted so that the bar code scanner reads the bar code image 4 seconds after the completion of the image recording. The number of occurrence of bar code reading error was zero, and the occurrence rate of bar code reading error was 0%. Results are shown in Table 1-2.

### (Example 9)

The bar code reading accuracy and the rapidity were evaluated in the same manner as in Example 6, except that the installation position of the bar code scanner was adjusted so that the bar code scanner reads the bar code image 60 seconds after the completion of the image recording. The number of occurrence of bar code reading error was zero, and the occurrence rate of bar code reading error was 0%. Results are shown in Table 1-2.

### (Example 10)

The bar code reading accuracy and the rapidity were evaluated in the same manner as in Example 1, except that, as the image rewriting condition, the time interval from the completion of the image erasing of a bar code image to the image recording of another bar code image was set to 0.6 seconds. The number of occurrence of bar code reading error was zero, and the occurrence rate of bar code reading error was 0%. Results are shown in Table 1-2.

### (Example 11)

The bar code reading accuracy and the rapidity were evaluated in the same manner as in Example 10, except that the installation position of the bar code scanner was adjusted so that the bar code scanner reads the bar code image 2 seconds after the completion of the image recording. The number of occurrence of bar code reading error was zero, and the occurrence rate of bar code reading error was 0%. Results are shown in Table 1-2.

### (Example 12)

The bar code reading accuracy and the rapidity were evaluated in the same manner as in Example 10, except that the installation position of the bar code scanner was adjusted so that the bar code scanner reads the bar code image 4 seconds after the completion of the image recording. The number of occurrence of bar code reading error was zero, and the occurrence rate of bar code reading error was 0%. Results are shown in Table 1-2.

### (Example 13)

The bar code reading accuracy and the rapidity were evaluated in the same manner as in Example 10, except that the installation position of the bar code scanner was adjusted so that the bar code scanner reads the bar code image 60 seconds after the completion of the image recording. The number of occurrence of bar code reading error was zero, and the occurrence rate of bar code reading error was 0%. Results are shown in Table 1-2.

### (Example 14)

The bar code reading accuracy and the rapidity were evaluated in the same manner as in Example 6, except that, as the image rewriting condition, the time interval from the completion of the image erasing of a bar code image to the image recording of another bar code image was set to 0.5 seconds. The number of occurrence of bar code reading error was zero, and the occurrence rate of bar code reading error was 0%. Results are shown in Table 1-2.

### (Example 15)

The bar code reading accuracy and the rapidity were evaluated in the same manner as in Example 14, except that the installation position of the bar code scanner was adjusted so that the bar code scanner reads the bar code image 2 seconds after the completion of the image recording. The number of occurrence of bar code reading error was zero, and the occurrence rate of bar code reading error was 0%. Results are shown in Table 1-2.

### (Example 16)

The bar code reading accuracy and the rapidity were evaluated in the same manner as in Example 14, except that the installation position of the bar code scanner was adjusted so that the bar code scanner reads the bar code image 4 seconds after the completion of the image recording. The number of occurrence of bar code reading error was zero, and the occurrence rate of bar code reading error was 0%. Results are shown in Table 1-2.

### (Example 17)

The bar code reading accuracy and the rapidity were evaluated in the same manner as in Example 14, except that the installation position of the bar code scanner was adjusted so that the bar code scanner reads the bar code image 60 seconds after the completion of the image recording. The number of occurrence of bar code reading error was zero, and the occurrence rate of bar code reading error was 0%. Results are shown in Table 1-2.

### (Example 18)

The bar code reading accuracy and the rapidity were evaluated in the same manner as in Example 1, except that the thermoreversible recording medium of Production Example 2 was used instead of the thermoreversible recording medium of Production Example 1 and irradiation power settings upon image recording and upon image erasing were set to 70% and 72%, respectively. The number of occurrence of bar code reading error was 2, and the occurrence rate of bar code reading error was 0.1%. Results are shown in Table 1-2.

### (Example 19)

The bar code reading accuracy and the rapidity were evaluated in the same manner as in Example 18, except that the installation position of the bar code scanner was adjusted so that the bar code scanner reads the bar code image 1 second after the completion of the image recording. The number of occurrence of bar code reading error was zero, and the occurrence rate of bar code reading error was 0%. Results are shown in Table 1-2.

### (Example 20)

The bar code reading accuracy and the rapidity were evaluated in the same manner as in Example 18, except that the thermosensitive recording medium of Production Example 3 was used instead of the thermoreversible recording medium of Production Example 1, and no image erasing was performed and an irradiation power setting upon image recording was set to 60%. The number of occurrence of bar code reading error was 2, and the occurrence rate of bar code reading error was 0.1%. Results are shown in Table 1-2.

### (Example 21)

The bar code reading accuracy and the rapidity were evaluated in the same manner as in Example 20, except that the installation position of the bar code scanner was adjusted so that the bar code scanner reads the bar code image 1 second after the completion of the image recording. The number of occurrence of bar code reading error was zero, and the occurrence rate of bar code reading error was 0%. Results are shown in Table 1-2.

### (Comparative Example 1)

The bar code reading accuracy and the rapidity were evaluated in the same manner as in Example 1, except that the "amplitude tuning unit" of the bar code scanner did not correct the amplitude. The number of occurrence of bar code reading error was 170, and the occurrence rate of bar code reading error was 8.5%. Results are shown in Table 1-2.

### (Comparative Example 2)

The bar code reading accuracy and the rapidity were evaluated in the same manner as in Comparative Example 1, except that the installation position of the bar code scanner was adjusted so that the bar code scanner reads the bar code image 1 second after the completion of the image recording. The number of occurrence of bar code reading error was 44, and the occurrence rate of bar code reading error was 2.2%. Results are shown in Table 1-2.

### (Comparative Example 3)

The bar code reading accuracy and the rapidity were evaluated in the same manner as in Comparative Example 1, except that the installation position of the bar code scanner was adjusted so that the bar code scanner reads the bar code image 2 seconds after the completion of the image recording. The number of occurrence of bar code reading error was 6, and the occurrence rate of bar code reading error was 0.3%. Results are shown in Table 1-2.

### (Comparative Example 4)

The bar code reading accuracy and the rapidity were evaluated in the same manner as in Comparative Example 1, except that the installation position of the bar code scanner was adjusted so that the bar code scanner reads the bar code image 4 seconds after the completion of the image recording. The number of occurrence of bar code reading error was 2, and the occurrence rate of bar code reading error was 0.1%. Results are shown in Table 1-2.

### (Comparative Example 5)

The bar code reading accuracy and the rapidity were evaluated in the same manner as in Comparative Example 1, except that the installation position of the bar code scanner was adjusted so that the bar code scanner reads the bar code image 60 seconds after the completion of the image recording. The number of occurrence of bar code reading error was zero, and the occurrence rate of bar code reading error was 0%. Results are shown in Table 1-2.

### (Comparative Example 6)

The bar code reading accuracy and the rapidity were evaluated in the same manner as in Comparative Example 1, except that, as the image rewriting condition, the time interval from the completion of the image erasing of a bar code image to the image recording of another bar code image was set to 0.6 seconds. The number of occurrence of bar code reading error was 126, and the occurrence rate of bar code reading error was 6.3%. Results are shown in Table 1-2.

### (Comparative Example 7)

The bar code reading accuracy and the rapidity were evaluated in the same manner as in Comparative Example 6, except that the installation position of the bar code scanner was adjusted so that the bar code scanner reads the bar code image 1 second after the completion of the image recording. The number of occurrence of bar code reading error was 28, and the occurrence rate of bar code reading error was 1.4%. Results are shown in Table 1-2.

### (Comparative Example 8)

The bar code reading accuracy and the rapidity were evaluated in the same manner as in Comparative Example 6, except that the installation position of the bar code scanner was adjusted so that the bar code scanner reads the bar code image 2 seconds after the completion of the image recording. The number of occurrence of bar code reading error was 4, and the occurrence rate of bar code reading error was 0.2%. Results are shown in Table 1-2.

### (Comparative Example 9)

The bar code reading accuracy and the rapidity were evaluated in the same manner as in Comparative Example 6, except that the installation position of the bar code scanner was adjusted so that the bar code scanner reads the bar code image 4 seconds after the completion of the image recording. The number of occurrence of bar code reading error was zero, and the occurrence rate of bar code reading error was 0%. Results are shown in Table 1-2.

### (Comparative Example 10)

The bar code reading accuracy and the rapidity were evaluated in the same manner as in Comparative Example 6, except that the installation position of the bar code scanner was adjusted so that the bar code scanner reads the bar code image 60 seconds after the completion of the image recording. The number of occurrence of bar code reading error was zero, and the occurrence rate of bar code reading error was 0%. Results are shown in Table 1-2.

### (Comparative Example 11)

The bar code reading accuracy and the rapidity were evaluated in the same manner as in Comparative Example 1, except that the thermoreversible recording medium of Production Example 2 was used instead of the thermoreversible recording medium of Production Example 1 and irradiation power settings upon image recording and upon image erasing were set to 70% and 72%, respectively. The number of occurrence of bar code reading error was 117, and the occurrence rate of bar code reading error was 5.9%. Results are shown in Table 1-2.

### (Comparative Example 12)

The procedure of Comparative Example 11 was performed except that the installation position of the bar code scanner was adjusted so that the bar code scanner reads the bar code image 1 second after the completion of the image recording. The bar code reading accuracy and the rapidity were evaluated in the same manner as in Comparative Example 1. The number of occurrence of bar code reading error was 24, and the occurrence rate of bar code reading error was 1.2%. Results are shown in Table 1-2.

### (Comparative Example 13)

The procedure of Comparative Example 11 was performed except that the installation position of the bar code scanner was adjusted so that the bar code scanner reads the bar code image 2 seconds after the completion of the image recording. The bar code reading accuracy and the rapidity were evaluated in the same manner as in Comparative Example 1. The number of occurrence of bar code reading error was 2, and the occurrence rate of bar code reading error was 0.1%. Results are shown in Table 1-2.

### (Comparative Example 14)

The procedure of Comparative Example 11 was performed except that the installation position of the bar code scanner was adjusted so that the bar code scanner reads the bar code image 4 seconds after the completion of the image recording. The bar code reading accuracy and the rapidity were evaluated in the same manner as in Comparative Example 1. The number of occurrence of bar code reading error was zero, and the occurrence rate of bar code reading error was 0%. Results are shown in Table 1-2.

### (Comparative Example 15)

The procedure of Comparative Example 11 was performed except that the installation position of the bar code scanner was adjusted so that the bar code scanner reads the bar code image 60 seconds after the completion of the image recording. The bar code reading accuracy and the rapidity were evaluated in the same manner as in Comparative Example 1. The number of occurrence of bar code reading error was zero, and the occurrence rate of bar code reading error was 0%. Results are shown in Table 1-2.

### (Comparative Example 16)

The bar code reading accuracy and the rapidity were evaluated in the same manner as in Comparative Example 1, except that the thermosensitive recording medium of Production Example 3 was used instead of the thermoreversible recording medium of Production Example 1, and no image erasing was performed and an irradiation power setting upon image recording was set to 60%. The number of occurrence of bar code reading error was 114, and the occurrence rate of bar code reading error was 5.7%. Results are shown in Table 1-2.

### (Comparative Example 17)

The bar code reading accuracy and the rapidity were evaluated in the same manner as in Comparative Example 16, except that the installation position of the bar code scanner was adjusted so that the bar code scanner reads the bar code image 1 second after the completion of the image recording. The number of occurrence of bar code reading error was 22, and the occurrence rate of bar code reading error was 1.1%. Results are shown in Table 1-2.

### (Comparative Example 18)

The bar code reading accuracy and the rapidity were evaluated in the same manner as in Comparative Example 16, except that the installation position of the bar code scanner was adjusted so that the bar code scanner reads the bar code image 2 seconds after the completion of the image recording. The number of occurrence of bar code reading error was 2, and the occurrence rate of bar code reading error was 0.1%. Results are shown in Table 1-2.

### (Comparative Example 19)

The bar code reading accuracy and the rapidity were evaluated in the same manner as in Comparative Example 16, except that the installation position of the bar code scanner was adjusted so that the bar code scanner reads the bar code image 4 seconds after the completion of the image recording. The number of occurrence of bar code reading error was zero, and the occurrence rate of bar code reading error was 0%. Results are shown in Table 1-2.

### (Comparative Example 20)

The bar code reading accuracy and the rapidity were evaluated in the same manner as in Comparative Example 16, except that the installation position of the bar code scanner was adjusted so that the bar code scanner reads the bar code image 60 seconds after the completion of the image recording. The number of occurrence of bar code reading error was zero, and the occurrence rate of bar code reading error was 0%. Results are shown in Table 1-2.

**Table 1-1**

| | Thermoreversible recording medium | Rewriting condition | Bar code scanner setting | | |
|---|---|---|---|---|---|
| | | Time interval from image erasing to image recording | Amplitude tuning function | | Time interval from completion of image recording to reading of bar code image |
| | | | Presence | Corrected medium | |
| Ex. 1 | | 10 sec | Yes | Normal recording contrast image | 0.5 sec |
| Ex. 2 | | | | | 1 sec |
| Ex. 3 | | | | | 2 sec |
| Ex. 4 | | | | | 4 sec |
| Ex. 5 | | | | | 60 sec |
| Ex. 6 | | | | Low contrast image | 0.5 sec |
| Ex. 7 | | | | | 2 sec |
| Ex. 8 | Production Example 1 | | | | 4 sec |
| Ex. 9 | | | | | 60 sec |
| Ex. 10 | | 0.6 sec (Recording immediately after erasing) | | Normal recording contrast image | 0.5 sec |
| Ex. 11 | | | | | 2 sec |
| Ex. 12 | | | | | 4 sec |
| Ex. 13 | | | | | 60 sec |
| Ex. 14 | | | | Low contrast image | 0.5 sec |
| Ex. 15 | | | | | 2 sec |
| Ex. 16 | | | | | 4 sec |
| Ex. 17 | | | | | 60 sec |
| Ex. 18 | Production Example 2 | 10 sec | | Normal recording contrast image | 0.5 sec |
| Ex. 19 | | | | | 1 sec |
| Ex. 20 | Production Example 3 | - | | | 0.5 sec |
| Ex. 21 | | | | | 1 sec |
| Comp. Ex. 1 | Production Example 1 | 10 sec | | | 0.5 sec |
| Comp. Ex. 2 | | | | | 1 sec |
| Comp. Ex. 3 | | | | | 2 sec |
| Comp. Ex. 4 | | | | | 4 sec |
| Comp. Ex. 5 | | | | | 60 sec |
| Comp. Ex. 6 | | 0.6 sec (Recording immediately after erasing) | | | 0.5 sec |
| Comp. Ex. 7 | | | | | 1 sec |
| Comp. Ex. 8 | | | | | 2 sec |
| Comp. Ex. 9 | | | | | 4 sec |
| Comp. Ex. 10 | | | No | | 60 sec |
| Comp. Ex. 11 | Production Example 2 | 10 sec | | | 0.5 sec |
| Comp. Ex. 12 | | | | | 1 sec |
| Comp. Ex. 13 | | | | | 2 sec |
| Comp. Ex. 14 | | | | | 4 sec |
| Comp. Ex. 15 | | | | | 60 sec |
| Comp. Ex. 16 | Production Example 3 | | | | 0.5 sec |
| Comp. Ex. 17 | | | | | 1 sec |
| Comp. Ex. 18 | | | | | 2 sec |
| Comp. Ex. 19 | | | | | 4 sec |
| Comp. Ex. 20 | | | | | 60 sec |

**Table 1-2**

| | Occurrence rate of bar code reading error | Rapidity |
|---|---|---|
| Ex. 1 | 0.2% | A |
| Ex. 2 | 0.1% | A |
| Ex. 3 | 0% | A |
| Ex. 4 | 0% | B |
| Ex. 5 | 0% | C |
| Ex. 6 | 0% | A |
| Ex. 7 | 0% | A |
| Ex. 8 | 0% | B |
| Ex. 9 | 0% | C |
| Ex. 10 | 0% | A |
| Ex. 11 | 0% | A |
| Ex. 12 | 0% | B |
| Ex. 13 | 0% | C |
| Ex. 14 | 0% | A |
| Ex. 15 | 0% | A |
| Ex. 16 | 0% | B |
| Ex. 17 | 0% | C |
| Ex. 18 | 0.1% | A |
| Ex. 19 | 0% | A |
| Ex. 20 | 0.1% | A |
| Ex. 21 | 0% | A |
| Comp. Ex. 1 | 8.5% | A |
| Comp. Ex. 2 | 2.2% | A |
| Comp. Ex. 3 | 0.3% | A |
| Comp. Ex. 4 | 0.1% | B |
| Comp. Ex. 5 | 0% | C |
| Comp. Ex. 6 | 6.3% | A |
| Comp. Ex. 7 | 1.4% | A |
| Comp. Ex. 8 | 0.2% | A |
| Comp. Ex. 9 | 0% | B |
| Comp. Ex. 10 | 0% | C |
| Comp. Ex. 11 | 5.9% | A |
| Comp. Ex. 12 | 1.2% | A |
| Comp. Ex. 13 | 0.1% | A |
| Comp. Ex. 14 | 0% | B |
| Comp. Ex. 15 | 0% | C |
| Comp. Ex. 16 | 5.7% | A |
| Comp. Ex. 17 | 1.1% | A |
| Comp. Ex. 18 | 0.1% | A |
| Comp. Ex. 19 | 0% | B |
| Comp. Ex. 20 | 0% | C |

As can be seen from Tables 1-1 and 1-2, Examples 1 to 9 and 10 to 17 can improve the reading accuracy of a bar code by adjusting the amplitude through correction with the amplitude tuning unit of the bar code scanner even when the time interval from the completion of the image recording to reading of the bar code image is shortened. In addition, the reading accuracy of a bar code can also be improved by shortening the time interval from the completion of image erasing of a bar code image to image recording of another bar code image.

From the results of Examples 18 and 19, it has been found that thermoreversible recording media having different layer constructions can similarly improve the reading accuracy of bar codes.

In addition, from the results of Examples 20 and 21, it has been found that even thermosensitive recording media, with which recording can be performed only once, can improve the reading accuracy of bar codes similar to thermoreversible recording media.

An optical information code reading method of the present invention has to read an optical information code image having low contrast due to reduced background reflectivity caused by non-contact type rewriting processing at a high speed which is required in physical distribution applications, and due to reduced concentration in the image recorded portion caused by reading the optical information code information immediately after recording of the optical information code image which is required for management of the physical distribution line.

The optical information code reading method of the present invention can meet the requirements in the physical distribution applications and allows the physical distribution line to operate without reducing the reading accuracy even in the low contrast optical information code image.

Therefore, the optical information code reading method of the present invention can be widely used as, for example, an admission ticket or a sticker for a frozen food container, industrial product, every type of chemical container, or large screen and various displays for physical distribution management or manufacturing process management, and in particular are suitable for use in a physical distribution management system, a delivery management system, a storage management system, and a process management system in a factory.

### Reference Signs List

- 1: Laser Oscillator
- 2: Collimator Lens + Focal Length Controller
- 3: Condenser Lens
- 4: Galvanometer
- 4a: Galvano Mirror
- 5: Scanning Unit
- 6: Protective Glass
- 7: Thermoreversible Recording Medium
- 10: Conveyer
- 11: Bar Code Scanner
- 12: Thermoreversible Recording Layer
- 13: Conveyance container
- 14: Image Recording Device
- 15: Image Erasing Device
- 16: Laser Beam Shielding Protection Cover
- 100, 110: Thermoreversible Recording Medium
- 101: Substrate + First Oxygen Barrier Layer
- 102: Thermoreversible Recording Layer
- 103: Intermediate Layer
- 104: Second Oxygen Barrier Layer
- 105: Under Layer
- 106: Ultraviolet Absorbing Layer

## Claims

1. A method comprising:
recording an optical information code on an information recording medium, the information recording medium being one on which image recording is performed by irradiation with laser beams;
wherein the image density of the optical information code image is increased over time after the image recording, and thereafter a desired image density is achieved by reducing the image density through heat treatment of the information recording medium;
the method further comprising:
reading the optical information code image by an optical information code scanner after the desired image density has been reached, wherein a time interval from completion of the image recording of the optical information code image to the reading of the optical information code image is 10 seconds or shorter; and
correcting, using an an amplitude tuning unit comprised as part of the optical information code scanner, a detected amplitude level of reflectivity from the information recording medium on which the optical information code image has been recorded; and
storing the corrected detected amplitude level.

2. The method according to claim 1, wherein the optical information code scanner reads the optical information code image in a state in which the optical information code scanner has read the information recording medium immediately after the optical information code image has been recorded thereon, and the amplitude tuning unit of the optical information code scanner has determined and stored the detected amplitude level optimum for reading.

3. The method according to claim 1 or 2, wherein the laser beams have a wavelength of 700 nm to 1,600 nm.

4. The method according to any one of claims 1 to 3, wherein information recording medium is a thermoreversible recording medium which comprises a support; and, on the support, a thermoreversible recording layer containing a photothermal converting material which absorbs light of a specific wavelength and converts the light to heat, a leuco dye, and a reversible color developer.

5. The method according to any one of claims 1 to 4, wherein the information recording medium is a thermoreversible recording medium which comprises a support, and, on the support, a photothermal conversion layer containing a photothermal converting material which absorbs light of a specific wavelength and converts the light to heat, and a thermoreversible recording layer containing a leuco dye and a reversible color developer.

6. The method according to any one of claims 1 to 5, wherein the optical information code image is erased and immediately thereafter another optical information code image is recorded.

7. The method according to claim 6, wherein a time interval from completion of image erasing of the optical information code image to image recording of the another optical information code image is 10 seconds or shorter.

8. The method according to any one of claims 1 to 7, wherein the method is used in a physical distribution management system, a delivery management system, a storage management system, a process management system in a factory, or any combination thereof.

9. The method according to any one of claims 1 to 8, wherein the optical information code image is a bar code image and the optical information code scanner is a bar code scanner.

## Patentansprüche

1. Verfahren, umfassend:
Aufzeichnen eines optischen Informationscodes auf einem Informationsaufzeichnungsmedium, wobei das Informationsaufzeichnungsmedium eines ist, auf dem die Bildaufzeichnung durch Bestrahlung mit Laserstrahlen durchgeführt wird;
worin die Aufzeichnungsdichte des optischen Informationscodebildes im Laufe der Zeit nach der Bildaufzeichnung erhöht wird und danach eine gewünschte Aufzeichnungsdichte durch Reduzieren der Aufzeichnungsdichte mittels Wärmebehandlung des Informationsaufzeichnungsmediums erreicht wird;
wobei das Verfahren ferner umfasst:
Lesen des optischen Informationscodebildes durch einen optischen Informationscode-Abtaster, nachdem die gewünschte Aufzeichnungsdichte erreicht worden ist, worin ein Zeitintervall vom Abschluss der Bildaufzeichnung des optischen Informationscodebildes bis zum Lesen des optischen Informationscodebildes 10 Sekunden oder kürzer ist; und
Korrigieren eines ermittelten Amplitudenniveaus des Reflexionsvermögens von dem Informationsaufzeichnungsmedium, auf dem das optische Informationscodebild aufgezeichnet worden ist, unter Verwendung einer Amplitudenabstimmungseinheit, die als Teil in den optischen Informationscode-Abtaster einbezogen ist; und
Speichern des korrigierten ermittelten Amplitudenniveaus.

2. Verfahren nach Anspruch 1, worin der optische Informationscode-Abtaster das optische Informationscodebild in einem Zustand liest, in dem der optische Informationscode-Abtaster das Informationsaufzeichnungsmedium gelesen hat, unmittelbar nachdem das optische Informationscodebild darauf aufgezeichnet worden ist, und die Amplitudenabstimmungseinheit des optischen Informationscode-Abtasters das ermittelte Amplitudenniveau-Optimum zum Lesen bestimmt und gespeichert hat.

3. Verfahren nach Anspruch 1 oder 2, worin die Laserstrahlen eine Wellenlänge von 700 nm bis 1600 nm aufweisen.

4. Verfahren nach einem der Ansprüche 1 bis 3, worin das Informationsaufzeichnungsmedium ein thermoreversibles Aufzeichnungsmedium ist, welches einen Träger umfasst und auf dem Träger eine thermoreversible Aufzeichnungsschicht, die Folgendes enthält: ein photothermisches Umwandlungsmaterial, das Licht einer bestimmten Wellenlänge absorbiert und das Licht in Wärme umwandelt, einen Leukofarbstoff und einen reversiblen Farbentwickler.

5. Verfahren nach einem der Ansprüche 1 bis 4, worin das Informationsaufzeichnungsmedium ein thermoreversibles Aufzeichnungsmedium ist, welches einen Träger umfasst und auf dem Träger eine photothermische Umwandlungsschicht, die ein photothermisches Umwandlungsmaterial enthält, das Licht einer bestimmten Wellenlänge absorbiert und das Licht in Wärme umwandelt, und eine thermoreversible Aufzeichnungsschicht, die einen Leukofarbstoff und einen reversiblen Farbentwickler enthält.

6. Verfahren nach einem der Ansprüche 1 bis 5, worin das optische Informationscodebild gelöscht wird und unmittelbar danach ein anderes optisches Informationscodebild aufgezeichnet wird.

7. Verfahren nach Anspruch 6, worin ein Zeitintervall vom Abschluss des Bildlöschens des optischen Informationscodebildes bis zur Bildaufzeichnung des anderen optischen Informationscodebildes 10 Sekunden oder kürzer ist.

8. Verfahren nach einem der Ansprüche 1 bis 7, worin das Verfahren in einem physischen Distributionsverwaltungssystem, einem Lieferverwaltungssystem, einem Lagerverwaltungssystem, einem Prozessmanagementsystem in einer Fabrik oder in jeglicher Kombination daraus verwendet wird.

9. Verfahren nach einem der Ansprüche 1 bis 8, worin das optische Informationscodebild ein Strichcodebild ist und der optische Informationscode-Abtaster ein Strichcodeleser ist.

## Revendications

1. Procédé comprenant :
l'enregistrement d'un code d'information optique sur un support d'enregistrement d'information, le support d'enregistrement d'information étant un support sur lequel un enregistrement d'image est réalisé par irradiation de faisceaux laser ;
dans lequel la densité d'image de l'image de code d'information optique est augmentée au fil du temps après l'enregistrement d'image et ensuite, une densité d'image souhaitée est réalisée en réduisant la densité d'image par l'intermédiaire d'un traitement thermique du support d'enregistrement d'information ;
le procédé comprenant en outre :
la lecture de l'image de code d'information optique au moyen d'un scanner de code d'information optique après que la densité d'image souhaitée a été atteinte, dans lequel un intervalle temporel depuis la fin de l'enregistrement d'image de l'image de code d'information optique jusqu'à la lecture de l'image de code d'information optique est de 10 secondes ou moins ; et
la correction, en utilisant une unité de réglage d'amplitude qui est constituée en tant que partie du scanner de code d'information optique, d'un niveau d'amplitude détecté de la réflectivité en provenance du support d'enregistrement d'information sur lequel l'image de code d'information optique a été enregistrée ; et
le stockage du niveau d'amplitude détecté corrigé.

2. Procédé selon la revendication 1, dans lequel le scanner de code d'information optique lit l'image de code d'information optique dans un état dans lequel le scanner de code d'information optique a lu le support d'enregistrement d'information immédiatement après que l'image de code d'information optique a été enregistrée dessus, et que l'unité de réglage d'amplitude du scanner de code d'information optique a déterminé et stocké le niveau d'amplitude détecté optimum pour la lecture.

3. Procédé selon la revendication 1 ou 2, dans lequel les faisceaux laser présentent une longueur d'onde de 700 nm à 1 600 nm.

4. Procédé selon l'une quelconque des revendications 1 à 3, dans lequel le support d'enregistrement d'information est un support d'enregistrement thermoréversible qui comprend un support et, sur le support, une couche d'enregistrement thermoréversible qui contient un matériau de conversion photothermique qui absorbe la lumière d'une longueur d'onde spécifique et qui convertit la lumière en chaleur, un colorant leuco et un développeur de couleur réversible.

5. Procédé selon l'une quelconque des revendications 1 à 4, dans lequel le support d'enregistrement d'information est un support d'enregistrement thermoréversible qui comprend un support et, sur le support, une couche de conversion photothermique qui contient un matériau de conversion photothermique qui absorbe la lumière d'une longueur d'onde spécifique et qui convertit la lumière en chaleur, et une couche d'enregistrement thermoréversible qui contient un colorant leuco et un développeur de couleur réversible.

6. Procédé selon l'une quelconque des revendications 1 à 5, dans lequel l'image de code d'information optique est effacée et immédiatement après, une autre image de code d'information optique est enregistrée.

7. Procédé selon la revendication 6, dans lequel un intervalle temporel depuis la fin de l'effacement d'image de l'image de code d'information optique jusqu'à l'enregistrement de l'autre image de code d'information optique est de 10 secondes ou moins.

8. Procédé selon l'une quelconque des revendications 1 à 7, dans lequel le procédé est utilisé dans un système de gestion de distribution physique, un système de gestion de livraison, un système de gestion de stockage, un système de gestion de processus dans une usine ou une quelconque combinaison de ces systèmes.

9. Procédé selon l'une quelconque des revendications 1 à 8, dans lequel l'image de code d'information optique est une image de code à barres et le scanner de code d'information optique est un scanner de code à barres.
